# FASCICULE DE BREVET EUROPEEN

(11) **EP 2 720 842 B1**
(45) Date de publication et mention de la délivrance du brevet: **23.08.2017**
(21) Numéro de dépôt: 12731559.6
(22) Date de dépôt: 12.06.2012
(51) Int. Cl.: B29B 13/02, B29C 49/68, B29C 49/64

(54) **PROCÉDÉ DE CHAUFFE D'ÉBAUCHES DE RÉCIPIENTS AVEC MESURE DE TEMPÉRATURE INTÉGRÉE ET UNITÉ DE CHAUFFE D'ÉBAUCHES EN MATIÈRE PLASTIQUE**
VERFAHREN ZUM ERWÄRMEN VON BEHÄLTERROHLINGEN MIT INTEGRIERTER TEMPERATURMESSUNG UND EINHEIT ZUR ERWÄRMUNG VON BEHÄLTERROHLINGEN
METHOD FOR HEATING CONTAINER BLANKS WITH INTEGRATED TEMPERATURE MEASUREMENT, AND UNIT FOR HEATING PLASTIC BLANKS

(30) Priorité: 17.06.2011 FR 1155340
(43) Date de publication de la demande: 23.04.2014
(73) Titulaire: Sidel Participations, 76930 Octeville-sur-Mer (FR)
(72) Inventeur: BELLEC, Caroline, F-76930 Octeville Sur Mer (FR); FEUILLOLEY, Guy, F-76930 Octeville Sur Mer (FR)
(74) Mandataire: Grassin d'Alphonse, Emmanuel Jean Marie
(86) Numéro de dépôt international: PCT/FR2012/051317
(87) Numéro de publication internationale: WO 2012/172250

(56) Documents cités:
- EP-A1- 2 392 442
- WO-A2-2011/066885
- DE-A1- 10 106 607
- US-A1- 2007 096 352
- US-A1- 2009 261 513

## Description

L'invention a trait à la fabrication de récipients à partir d'ébauches en matière plastique tel que PET. Le terme « ébauche » est ici employé pour désigner tant une préforme qu'un récipient intermédiaire ayant subi un premier soufflage et destiné à en subir un second en vue d'obtenir le récipient final. Dans ce qui suit, on suppose néanmoins pour simplifier que les ébauches sont des préformes.

La fabrication des récipients comprend classiquement une première opération consistant à chauffer les préformes au défilé dans un four muni de sources de rayonnement infrarouge qui sont classiquement des lampes halogènes rayonnant sur un large spectre ou, selon une technologie plus récente, des diodes laser qui rayonnent sur un spectre plus restreint dans le domaine de l'infrarouge, cf. par exemple la demande de brevet européen EP 1 824 659 (SIDEL).

Une deuxième opération consiste à transférer les préformes chaudes aussitôt sorties du four dans un moule pour y subir un soufflage à haute pression, éventuellement doublé d'un étirage.

La chauffe des préformes, également dénommée conditionnement thermique, est une opération délicate en raison de l'importance que revêt la température du matériau pour les opérations subséquentes de soufflage ou d'étirage soufflage.

En effet, la température moyenne de la préforme doit être à la fois supérieure à la température de transition vitreuse de la matière dont elle est constituée (environ 80°C pour le PET), et inférieure à une température (environ 140°C pour le PET) au-delà de laquelle le matériau présente des risques de cristallisation qui rendrait la préforme impropre au soufflage.

Un réglage grossier de la puissance optique rayonnée dans le four est généralement suffisant pour assurer le maintien de la température moyenne des préformes entre des bornes ainsi définies.

Cependant, la distribution axiale de température (c'est-à-dire parallèlement à l'axe) de la préforme est également importante, en raison des conséquences de cette distribution sur la répartition de la matière lors du soufflage du récipient, dont la forme est généralement complexe. Il peut notamment être nécessaire de surchauffer certaines zones destinées à subir au sein du moule un surétirage, par exemple pour former des réserves en creux (cas typique : récipients à poignées) ou des saillies (cas typique : récipients à fond pétaloïde).

S'il est relativement aisé de définir, pour une préforme donnée, un profil thermique théorique en fonction du récipient à fabriquer, il s'avère, en pratique, éminemment complexe d'obtenir effectivement ce profil thermique dans une production industrielle à une cadence typique de 50 000 préformes par heure, et de maintenir ce profil tout au long de la production, en raison d'inévitables changement contextuels (notamment variations de la température ambiante de plusieurs degrés au cours de la journée, variation du taux d'hygrométrie) ou de dérives (que l'on constate de manière quasi systématique) affectant les réglages machine.

L'obtention d'un bon profil de chauffe repose aujourd'hui encore sur le savoir-faire des opérateurs affectés aux machines, qui effectuent leurs réglages machine sur le four directement d'après leur propre perception de la qualité des récipients finaux sortant des moules.

Mais l'inertie d'un four, c'est-à-dire le temps nécessaire pour qu'une modification d'un paramètre (tel que la puissance rayonnée) se traduise concrètement par une modification effective - et correspondant à l'objectif visé - dans le profil de chauffe des préformes, est importante.

De fait, on constate que, dès lors qu'une dérive a été signalée, le temps nécessaire pour procéder aux corrections nécessaires, lié à l'inertie du four, peut atteindre de nombreuses minutes, pendant lesquelles les milliers de récipients produits sont non-conformes - sans compter les récipients produits pendant la durée (inconnue) écoulée entre l'instant où la dérive a effectivement pris naissance, et l'instant où elle a été constatée.

Des tentatives ont été faites pour systématiser le contrôle de la qualité de la chauffe, c'est-à-dire la conformité du profil de chauffe avec le profil théorique visé.

Il existe des techniques de contrôle statistique par prélèvement, tel que celui proposé dans le brevet américain US 6 839 652, qui décrit une méthode pour déterminer la distribution de température dans l'épaisseur d'une préforme, à partir de mesures effectuées en laboratoire au moyen de pyromètres disposés en regard de la paroi de la préforme. Mais ces techniques, qui peuvent à la rigueur convenir à une préproduction ou à une production de produits spéciaux à faible cadence, ne sont pas adaptées à la production industrielle en grande série.

Les prélèvements engendrent en effet un temps de transfert depuis la chaîne au banc d'essai, au cours duquel le profil de température est modifié (tendant à une homogénéisation par diffusion), de sorte que les mesures ne rendent pas fidèlement compte de la distribution de température au sein des préformes présentes sur la chaîne de fabrication.

Il a déjà été proposé d'automatiser quelque peu la phase de conditionnement thermique. Ainsi, le brevet américain US 7 220 378 (Pressco) préconise d'effectuer une mesure de la température de préformes, à la volée, à l'issue du conditionnement thermique réalisé de manière classique au moyen de lampes. Une rétroaction est envisagée sur les réglages du four, par exemple en augmentant la puissance délivrée par les lampes afin d'élever la température de chauffe, ou en augmentant la puissance de la ventilation pour, au contraire, diminuer cette température.

Mais cette technique n'est pas vraiment satisfaisante.

D'abord, elle nécessite une modification de la chaîne de production, puisqu'elle suppose l'installation d'une série de capteurs thermiques dans le prolongement du four. Il en résulte un allongement du trajet parcouru par les préformes entre le four et le moule, et une augmentation du temps de transit entre le conditionnement thermique et le soufflage. En termes simples, la mesure en elle-même déforme le processus.

Ensuite, même si les capteurs thermiques sont orientés vers les préformes, la présence d'un rayonnement thermique résiduel issu du four peut altérer la mesure de température, et par conséquent induire des erreurs dans les réglages du profil de chauffe.

En outre, si la mesure de température, effectuée à l'issue du conditionnement thermique, permet effectivement de détecter un décalage entre le profil thermique réel d'une préforme (ou d'une série de préformes) et le profil thermique théorique, elle ne permet cependant pas d'en analyser les causes. Il relève par conséquent du savoir-faire de l'opérateur d'évaluer les causes de l'écart et d'appliquer les corrections qu'il juge nécessaires pour obtenir le profil thermique souhaité. Le document US2009 0261531 décrit par ailleurs une unité de chauffe des préformes comprenant des dispositifs d'émission infrarouge et des capteurs, qui mesurent l'intensité de rayonement.

L'invention vise notamment à remédier aux inconvénients précités des techniques connues.

Plus précisément, parmi les objectifs poursuivis, citons :
- l'optimisation de la qualité de chauffe des ébauches,
- le maintien d'une qualité de chauffe sensiblement constante au cours de la production
- la minimisation du taux de rebut dû à une inadéquation du profil de chauffe,
- l'automatisation du processus de chauffe, permettant d'accroître la productivité.

A cet effet, il est proposé, en premier lieu, un procédé de chauffe d'une ébauche en matière plastique pour la fabrication d'un corps creux par formage à partir de l'ébauche, qui comprend :
- une étape d'introduction de l'ébauche dans une unité de chauffe comprenant des sources de rayonnement électromagnétique monochromatique ou pseudo-monochromatique émettant dans l'infrarouge ;
- une étape de chauffe au cours de laquelle l'ébauche est exposée au rayonnement des sources, réglées à une puissance d'émission prédéterminée, une opération de mesure de la température de paroi de l'ébauche, et une opération de modulation de la puissance d'émission en fonction de la température mesurée étant conduites pendant l'exposition de l'ébauche au rayonnement des sources.

Diverses caractéristiques supplémentaires de ce procédé peuvent être prévues, seules ou en combinaison :
- Le procédé comprend une opération supplémentaire de modulation de la puissance d'émission en fonction de la température mesurée.
- La mesure de température est effectuée pour une pluralité de zones superposées sur la paroi de l'ébauche.
- La modulation de la puissance d'émission est effectuée séparément pour chaque zone.
- La température mesurée pour chaque zone est comparée à une température théorique prédéterminée, et :
   ∘ tant que la température mesurée est décrétée égale à la température théorique, la puissance d'émission pour la zone est maintenue,
   ∘ dès que la température mesurée est décrétée supérieure à la température théorique, la puissance d'émission pour la zone est diminuée,
   ∘ dès que la température mesurée est décrétée inférieure à la température théorique, la puissance d'émission pour la zone est augmentée, un dispositif de commande de la puissance d'émission des sources apte à moduler la puissance d'émission des sources, la puissance d'émission étant modulée en fonction de la température mesurée.

Il est proposé, en second lieu, une unité de chauffe d'ébauches en matière plastique pour la fabrication de corps creux par formage à partir des ébauches, qui comprend un four muni d'une paroi rayonnante tapissée de sources de rayonnement électromagnétique monochromatique ou pseudo-monochromatique émettant dans l'infrarouge à une puissance d'émission prédéterminée, et délimitant une enceinte où sont destinées à défiler les ébauches en regard de la paroi rayonnante, cette unité de chauffe comprenant en outre au moins un dispositif de mesure de la température des ébauches, pointant vers l'enceinte.

Diverses caractéristiques supplémentaires de cette unité de chauffe peuvent être prévues, seules ou en combinaison :
- Le dispositif de mesure comprend au moins un capteur thermique ayant une sensibilité optique incluse dans une gamme prédéterminée de longueur d'ondes ne contenant pas la longueur d'onde ou les longueurs d'onde des sources.
- Le dispositif de mesure est agencé pour effectuer une mesures de température sur une pluralité de zones superposées sur une même ébauche.
- Le dispositif de mesure comprend plusieurs capteurs thermiques superposés, pointant chacun vers une zone respective.
- L'unité de chauffe comprend en outre :
   ∘ un dispositif de commande de la puissance d'émission des sources ;
   o une unité de contrôle reliée au dispositif de mesure et au dispositif de commande, cette unité de contrôle étant programmée pour comparer un profil thermique réel mesuré sur une ébauche avec un profil thermique théorique prédéterminé, et pour commander une modulation de la puissance d'émission de sources en fonction de cette comparaison.
- L'unité de contrôle est programmée pour effectuer une comparaison de la température de chaque zone avec une température théorique, et pour commander une modulation de la puissance d'émission pour chaque zone séparément.
- La paroi rayonnante est agencée en une matrice de sources de rayonnement infrarouge, et cette matrice est subdivisée en une pluralité de sous-matrices situées chacune à la même ordonnée qu'une zone de mesure, et l'unité de contrôle est programmée pour commander une modulation de la puissance émise individuellement par chaque sous-matrice.
- Le four comprend une paroi opposée à la paroi rayonnante, et le dispositif de mesure est au moins partiellement logé dans cette paroi opposée.

D'autres objets et avantages de l'invention apparaîtront à la lumière de la description faite ci-après à titre illustratif, non limitatif, en référence aux dessins annexés dans lesquels :

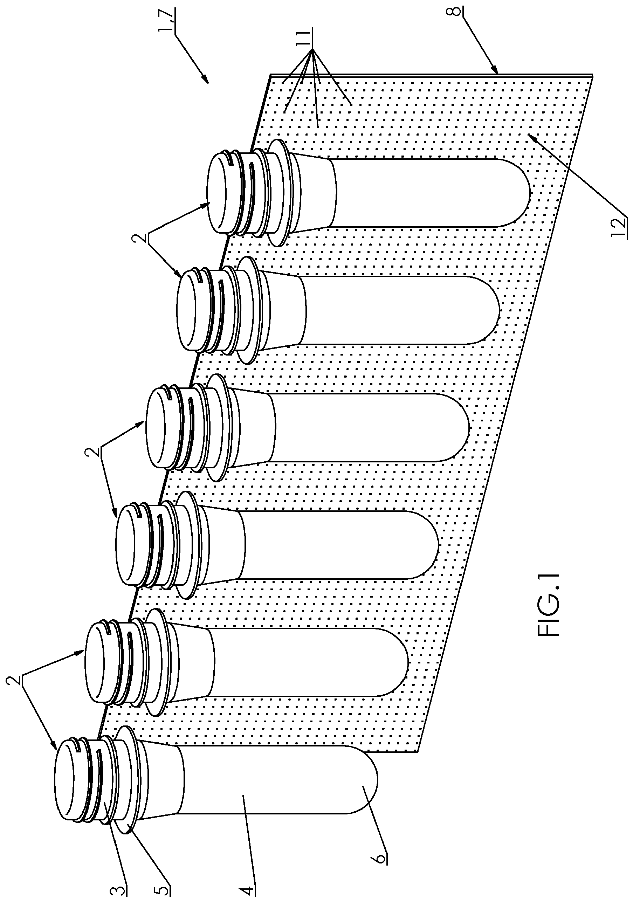

- la figure 1 est une vue en perspective illustrant partiellement une unité de chauffe comprenant une paroi tapissée de sources infrarouge ponctuelles, devant laquelle défilent des préformes ;
- la figure 2 est une vue schématique montrant l'unité de chauffe de la figure 1 associée à ses moyens de contrôle de la température et de commande de la puissance rayonnée ;
- la figure 3 est une vue schématique en coupe transversale montrant l'unité de chauffe de la figure 2.

Sur les figures est schématiquement représentée une unité 1 de chauffe d'ébauches **2** de récipients au défilé - en l'occurrence des préformes, bien qu'il puisse s'agir de récipients intermédiaires ayant subi des opérations temporaires de formage et destinées à subir une ou plusieurs opérations subséquentes pour l'obtention des récipients définitifs. Dans ce qui suit, on suppose que les ébauches **2** sont des préformes.

Chaque préforme **2,** réalisée dans une matière thermoplastique telle que polyéthylène téréphtalate (PET), comprend un col **3,** qui n'est pas (ou peu) soumis à la chauffe et dont la forme est définitive, et un corps **4** séparé du col par une collerette **5** et qui se termine, à l'opposé du col **3,** par un fond **6** hémisphérique.

Dans l'unité **1** de chauffe, les préformes **2** sont fixées à des supports pivotants appelés tournettes, qui entraînent les préformes **2** en rotation autour de leur axe principal de manière à exposer l'ensemble du corps **4** à la chauffe.

Sur les figures, on a représenté les préformes **2** col **3** en haut, mais cette représentation est arbitraire et illustrative, et les préformes **2** pourraient être orientées col **3** en bas.

L'unité **1** de chauffe comprend un four **7** muni d'une paroi **8** rayonnante et d'une paroi **9** parallèle opposée, absorbante ou réfléchissante. Les parois **8, 9** définissent entre elles une enceinte **10** au sein de laquelle défilent les préformes **2.** La paroi **8** rayonnante est tapissée d'une pluralité de sources **11** de rayonnement électromagnétique émettant de manière à la fois monochromatique (ou pseudo-monochromatique), et directive vers les préformes **2,** dans le domaine de l'infrarouge.

En théorie, une source monochromatique est une source idéale émettant une onde sinusoïdale de fréquence unique. En d'autres termes, son spectre en fréquence est constitué d'une seule raie de largeur spectrale nulle (Dirac).

Dans la pratique, une telle source n'existe pas, une source réelle étant au mieux quasi-monochromatique, c'est-à-dire que son spectre en fréquence s'étend sur une bande de largeur spectrale faible mais non nulle, centrée sur une fréquence principale où l'intensité du rayonnement est maximale. Dans la présente description, une telle source réelle est dite monochromatique.

Par ailleurs, dans la présente description, on qualifie de « pseudo-monochromatique » une source émettant de manière quasi-monochromatique sur un spectre discret comprenant plusieurs bandes étroites centrées sur des fréquences principales distinctes. On parle également de source multimodes.

En pratique, les sources **11** sont des diodes laser infrarouge. Les sources **11** sont organisées par juxtaposition (c'est-à-dire horizontalement) et superposition (c'est-à-dire verticalement) pour former une matrice **12.** Selon un mode préféré de réalisation, les diodes **11** sont des diodes laser à cavité verticale émettant par la surface (VCSEL), chaque diode **11** émettant par exemple un faisceau laser d'une puissance unitaire nominale de l'ordre de quelques dizaines de milliWatt, à une longueur d'onde λ située dans la plage des infrarouges courts et moyens et choisie pour correspondre à un bon rendement d'absorption par le matériau des préformes **2 -** par exemple de l'ordre de 1 µm pour le PET. En variante, on peut choisir des sources **11** émettant sur un spectre prédéterminé dans le domaine de l'infrarouge, dans lequel le rendement d'absorption du matériau est bon, ou combiner des sources **11** émettant à diverses longueurs d'ondes λ₁,...,λ_{N} auxquelles le rendement d'absorption du matériau est bon.

Pour plus de précisions sur le choix de la (ou des) longueur(s) d'onde, on pourra se référer à la demande internationale WO2008/113908 (SIDEL).

On note L le nombre de lignes de sources **11** de la matrice **12,** et C le nombre de colonnes de sources **11.**

A l'échelle des préformes **2,** les sources **11** peuvent être considérées comme des sources ponctuelles, qui émettent chacune un rayonnement directif, c'est-à-dire sous forme d'un faisceau lumineux dont le demi-angle solide au sommet est fermé, et de préférence compris entre 10° et 60°. Le faisceau peut être symétrique de révolution (i.e. à section circulaire), ou non symétrique de révolution (par exemple à section elliptique).

L'unité **1** de chauffe est conçue pour permettre une modulation de la puissance (on parle également de l'intensité) du rayonnement émis par chaque source **11,** ou de préférence par groupes de sources, de manière à suivre un profil prédéterminé de puissance rayonnée, suivant l'axe des préformes **2.**

A cet effet, la matrice **12** est subdivisée en un ensemble de sous-matrices **12A, 12B,...,12I** adjacentes (c'est-à-dire superposées verticalement et/ou juxtaposées horizontalement), contenant chacune un groupe connexe de sources **11** dont la puissance est identique et modulée simultanément. Chaque sous-matrice **12A, 12B,...,12I** comprend un nombre prédéterminé de sources **11** réparties en N lignes (définissant la hauteur de la sous-matrice) et P colonnes (définissant la largeur de la sous-matrice), où N et P sont des nombres entiers.

On définit par ailleurs la position d'une sous-matrice 12A, **12B,...,12I** au sein de la matrice **12** par :
- une abscisse X, lorsque la sous-matrice **12A, 12B,...,12I** comprend un nombre P de colonnes strictement inférieur au nombre C de colonnes de la matrice **12,** définie par la distance, mesurée horizontalement, d'une colonne centrale de la sous-matrice **12A, 12B,...,12I** à un bord **13** amont de la paroi **8** rayonnante ;
- une ordonnée Y, définie par la distance, mesurée verticalement, d'une ligne centrale de la sous-matrice **12A, 12B,...,12I** à un bord supérieur **14** de la paroi **8** rayonnante.

Selon un mode particulier de réalisation, les sous-matrices **12A, 12B,...,12I** comprennent toutes le même nombre de sources **11,** N et P étant égaux pour toutes les sous-matrices **12A, 12B,...,12I,** L et C étant des multiples de N et P, respectivement. En variante, les sous-matrices **12A, 12B,...,12I** n'ont pas la même hauteur et/ou la même largeur, les nombres N et P pouvant varier d'une sous-matrice **12A, 12B,...,12I** à l'autre.

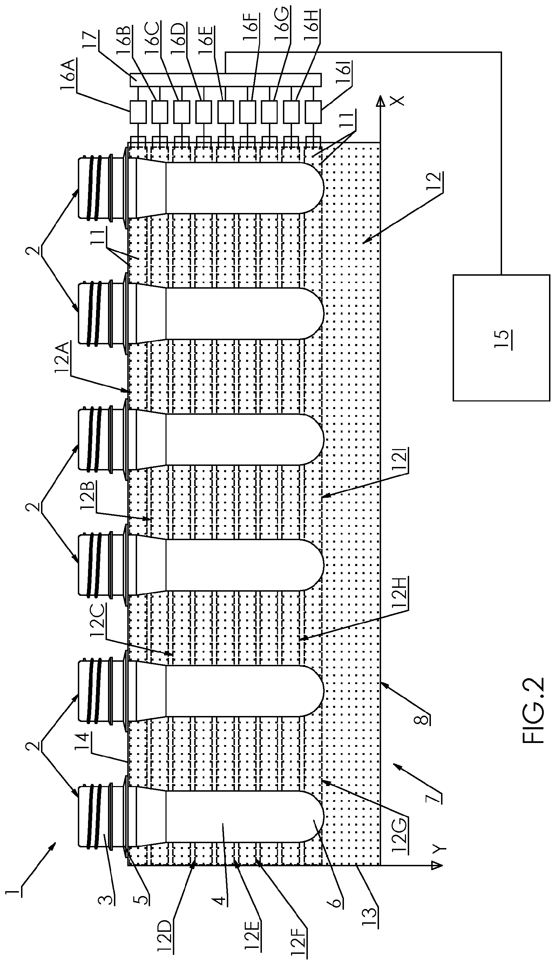

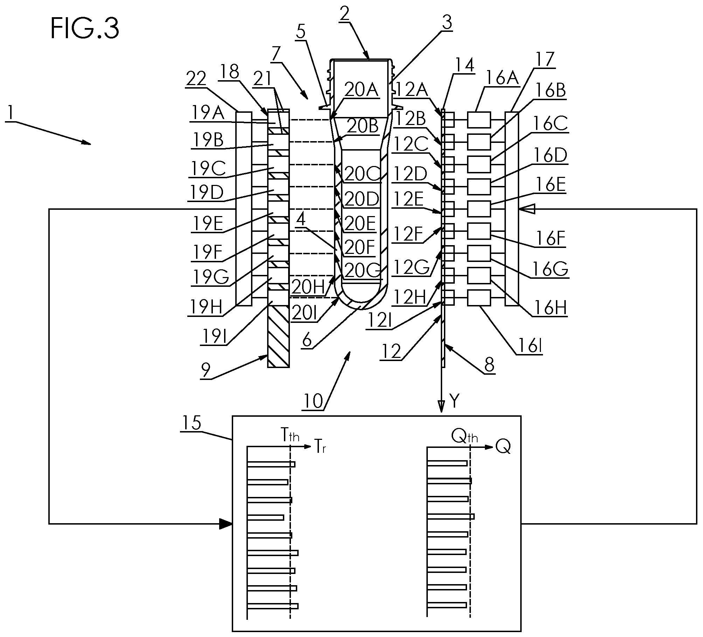

Dans l'exemple simple illustré sur les figures 2 et 3, on a représenté une subdivision simplifiée horizontale de la matrice **12,** où la longueur de chaque sous-matrice **12A, 12B,...,12I** est identique à celle de la matrice **12** (c'est-à-dire que N = L), et où sa hauteur est une division entière de celle de la matrice **12** (c'est-à-dire que P est un diviseur de C). La position de chaque sous-matrice **12A, 12B,...,12I** est par conséquent définie ici par sa seule ordonnée Y.

En l'espèce, on a représenté neuf sous-matrices **12A, 12B,...,12I** équiréparties sur la hauteur d'une préforme **2,** qui, comme on le voit sur la figure 2, peut être inférieure à la hauteur de la matrice **12,** laquelle peut en effet être adaptée à plusieurs gammes de préformes **2** de longueurs variables. Dans ce cas, les sources **11** situées au-dessous des préformes peuvent simplement être éteintes, puisqu'inutiles à la chauffe, et les sous-matrices **12A, 12B,...,12I** ne constituent alors une subdivision que d'une partie de la matrice **12,** correspondant à la surface située en regard des préformes **2.**

Arbitrairement, à des fins de lisibilité on a représenté sur les figures une faible densité de sources **11,** telle que chaque sous-matrice **12A, 12B,...,12I** ne comprend que trois lignes de sources **11.** En pratique, la densité de diodes sur une plaque VCSEL peut être bien supérieure.

La modulation de la puissance des sources **11** de chaque sous-matrice **12A, 12B,... ,12I** est effectuée de manière automatique, l'unité **1** de chauffe comprenant à cet effet une unité **15** de contrôle reliée à une série de variateurs **16A, 168,...,16I** de puissance associé chacun à une sous-matrice **12A, 12B,...,12I** respective.

Comme cela est illustré sur la figure 3, le signal issu de l'unité **15** de contrôle est un signal multiplexé (par exemple de manière temporelle), et l'unité **1** de chauffe comprend un démultiplexeur **17** interposé entre l'unité **15** de contrôle et les variateurs **16A, 16B,...,16I,** qui assure le démultiplexage du signal reçu de l'unité **15** de contrôle et la transmission d'une consigne individuelle de puissance à chaque variateur **16A, 16B,...,16I,** pour le réglage séparé de la puissance délivrée par chaque sous-matrice **12A, 12B,...,12I** suivant les instructions de l'unité **15** de contrôle, résultant des calculs effectués par celle-ci.

Ces calculs sont effectués sur la base d'une ou de plusieurs mesures de température effectuée(s) sur les préformes **2** pendant l'opération de chauffe, au sein du four **7.**

A cet effet, l'unité **1** de chauffe comprend un ou plusieurs pyromètres **18** sensible(s) à une gamme prédéterminée de longueurs d'onde dans le domaine infrarouge, relié(s) à l'unité **15** de contrôle, pointant vers l'enceinte **10** et en regard duquel (ou desquels) défilent les préformes **2.**

Selon un mode de réalisation illustré sur la figure 3, chaque pyromètre **18** comprend une série de capteurs **19A, 19B, ...., 19I** thermiques superposés, pointant chacun vers une zone **20A, 20B,...,20I,** dite zone de mesure, correspondant à une tranche du corps **4** des préformes **2,** située à la même ordonnée Y qu'une sous-matrice **12A, 12B,...,12I** de sources **11** (ou qu'une rangée horizontale de sous-matrices **12A, 12B,...,12I** de même ordonnée Y).

En variante, le pyromètre **18** peut se présenter sous forme d'une caméra thermique dont le champ de vision couvre le corps **4** des préformes **2,** ce champ étant par exemple découpé au sein de l'unité **15** de contrôle en une série de zones de mesure superposées.

Le (ou chaque) pyromètre **18** peut être disposé soit à la sortie de l'enceinte **10** et pointant vers l'intérieur de celle-ci, soit directement dans l'enceinte **10.**

Selon un mode de réalisation illustré sur la figure 3, le pyromètre **18** est disposé de manière que les capteurs 19A, 19B,..., 19I (ou l'objectif de la caméra) pointent transversalement (c'est-à-dire perpendiculairement au trajet des préformes **2**) vers l'enceinte 10. Plus précisément, comme on le voit sur la figure 3, les capteurs 19A, 19B,..., 19I peuvent être logés dans des ouvertures **21** ménagés dans la paroi **9** opposée, de manière que leur extrémité frontale, par laquelle la mesure est effectuée, débouche dans l'enceinte **10.**

Le ou chaque pyromètre **18** présente une sensibilité optique incluse dans une gamme [∧ₘᵢₙ, ∧ₘₐₓ] prédéterminée de longueurs d'onde, dénommée gamme de fonctionnement ou domaine spectral, incluant au moins une partie (et de préférence la totalité) du domaine spectral infrarouge dans lequel rayonnent les préformes **2** en cours de chauffe.

En revanche, on choisira de préférence le ou chaque pyromètre **18** de manière que sa gamme [∧ₘᵢₙ, ∧ₘₐₓ] de fonctionnement ne contienne pas la longueur d'onde λ - ou les longueurs d'onde λ₁,....,λ_{N} - d'émission des sources **11.**

A titre d'exemple, pour des sources **11** émettant un rayonnement infrarouge autour d'une longueur d'onde de 1 µm, on pourra choisir un pyromètre **18** ayant un domaine spectral compris entre 8 µm et 15 µm. La société MICRO-EPSILON fournit un tel pyromètre sous la dénomination commerciale OPTRIS CSmicro.

De la sorte, les mesures de température effectuées par le pyromètre **18** ne sont pas altérées par le rayonnement issu des sources **11.** En d'autres termes, le pyromètre **18** ne « voit » pas le rayonnement des sources **11.**

Dans l'hypothèse où le pyromètre **18** est disposé dans l'enceinte **10** même, il est en outre préférable qu'il soit constitué de matériaux n'absorbant pas les infrarouges aux longueurs d'ondes d'émission des sources **11,** de sorte à éviter un échauffement des composants du pyromètre **18,** qui nuirait à son bon fonctionnement général, ou à tout le moins à la fiabilité de ses mesures.

Ainsi, quel que soit le mode de réalisation retenu pour le pyromètre **18,** à chaque sous-matrice **12A, 12B,...,12I** positionnée à une certaine ordonnée Y (ou à chaque rangée horizontale de sous-matrices **12A, 12B,...,12I** de même ordonnée Y), correspond une zone **20A, 20B,...,20I** de mesure respective, située à la même ordonnée Y.

Les mesures thermiques effectuées par le pyromètre **18** pour chaque préforme **2** défilant devant lui sont communiquées à l'unité **15** de contrôle. Comme illustré sur la figure 3, les capteurs **19A, 19B,...,19I** du pyromètre **18** sont reliés à un multiplexeur **22** qui assure un multiplexage temporel, des signaux issus des capteurs **19A, 19B,...,19I** et adresse à l'unité **15** de contrôle un signal multiplexé.

L'unité **15** de contrôle effectue une analyse du signal ainsi reçu et reconstruit le profil thermique réel du corps **4** de la préforme **2** en rassemblant les températures mesurées pour chaque zone **20A, 20B,...,20I** de mesure.

L'unité **15** de contrôle effectue alors une comparaison du profil thermique réel ainsi établi avec le profil thermique théorique qui constitue l'objectif visé. En pratique, la comparaison est effectuée individuellement pour chaque zone **20A, 20B,...,20I.**

Plus précisément, la température réelle, notée Tᵣ, mesurée pour chaque zone **20A, 20B,...,20I** de mesure, est comparée avec une température théorique, notée Tₜₕ, souhaitée pour cette zone **20A, 20B,...,20I.**

Tant que la température Tᵣ réelle de la zone **20A, 20B,...,20I** est décrétée égale à la température Tₜₕ théorique, le réglage du variateur **16A, 16B,...,16I** de puissance pilotant la sous-matrice **12A, 12B,...,12I** correspondante est maintenu.

L'égalité stricte ne pouvant être atteinte en pratique, la température Tᵣ réelle est en fait décrétée égale à la température Tₜₕ théorique lorsque la température Tᵣ réelle est comprise dans un intervalle de tolérance autour de la température Tₜₕ théorique.

Par exemple, on peut décréter l'égalité lorsque Tᵣ = Tₜₕ ± δT, où δT est une tolérance (prédéterminée) et possède soit une valeur absolue, indépendante de la température Tₜₕ (par exemple de l'ordre de quelques degrés), soit une valeur relative, correspondant à une fraction de la température Tₜₕ théorique, typiquement de l'ordre de quelques pourcent (par exemple de 1% à 5 % de Tₜₕ).

En revanche, dès lors que la température Tᵣ réelle de la zone **20A, 20B,...,20I** est décrétée différente de la température Tₜₕ théorique, c'est-à-dire que la température Tᵣ réelle se trouve en dehors de l'intervalle de tolérance Tₜₕ ± δT, l'unité **15** de contrôle commande une modification de la consigne délivrée au variateur **16A, 16B,...,16I** de puissance.

Concrètement, l'unité **15** de contrôle applique le schéma suivant :
- lorsque la température Tᵣ réelle est au-delà de l'intervalle de tolérance, c'est-à-dire que Tr > Tₜₕ + δT, l'unité 15 de contrôle commande une diminution de la puissance rayonnée par la sous-matrice **12A, 12B,...,12I** correspondante,
- lorsque la température réelle est en-deçà de l'intervalle de tolérance, c'est-à-dire que Tr < Tₜₕ + δT, l'unité **15** de contrôle commande au contraire une augmentation de la puissance rayonnée par la sous-matrice **12A, 12B,...,12I** correspondante.

Ces deux situations sont illustrées sur la figure 3, où le diagramme tracé à gauche représente le profil thermique réel reconstruit par l'unité **15** de contrôle à partir du signal reçu du pyromètre, dans lequel chaque barre représente la température mesurée pour chaque zone **20A, 20B,...,20I** de mesure, et la ligne transversale en pointillés représente la température Tₜₕ visée (l'intervalle de tolérance étant invisible à cette échelle de tracé), supposée pour simplifier identique pour toutes les zones **20A, 20B,...,20I.** En d'autres thermes, la ligne pointillée représente le profil thermique théorique. On voit que le profil thermique réel est différent du profil thermique théorique, ce qui justifie qu'une correction soit appliquée à la consigne de puissance délivrée aux sources **11.** Plus précisément, suivant les zones, la température Tᵣ réelle est soit supérieure, soit inférieure à la température Tₜₕ théorique.

On a tracé à droite le nouveau profil de puissance (notée Q et mesurée en Watt), rassemblant les consignes de puissances calculées par l'unité **15** de contrôle après application du schéma présenté ci-dessus, à communiquer aux variateurs **16A, 16B,...,16I** de puissance. Dans ce diagramme, chaque barre représente la consigne de puissance à délivrer au variateur **16A, 16B,...,16I** de puissance relié à la sous-matrice **12A, 12B,...,12I** située à l'ordonnée de la zone **20A, 20B,...,20I** correspondante dont la température est connue du profil thermique (diagramme de gauche), et la ligne transversale en pointillés représente la puissance théorique, notée Qₜₕ qu'il serait nécessaire de délivrer pour obtenir la température théorique Tₜₕ (supposée, comme nous l'avons vu, identique pour toutes les zones **20A, 20B,...,20I** dans le présent exemple).

Ce profil de puissance est communiqué par l'unité **15** de contrôle aux variateurs **16A, 16B,...,16I** de puissance via le démultiplexeur **17,** et la puissance délivrée par chaque sous-matrice **12A, 12B,...,12I** est modifiée en conséquence, suivant la consigne reçue individuellement.

Il en résulte une modification du profil de chauffe des préformes **2.**

L'unité **1** de chauffe qui vient d'être décrite, et son procédé de fonctionnement, présentent les avantages suivants.

Premièrement, la température étant contrôlée pendant le conditionnement thermique, le profil thermique de chaque préforme **2** résulte directement du profil de puissance délivré par la paroi **8** rayonnante, sans que des paramètres extérieurs (notamment le temps de transfert entre le four **7** et une zone **20A, 20B,...,20I** de mesure séparée, ou encore la température ambiante à l'extérieur du four **7**) n'influent sur la mesure.

Deuxièmement, la température étant contrôlée au sein même du four **7,** il est possible de localiser sur le trajet des préformes **2** (c'est-à-dire horizontalement, suivant l'axe des abscisses) d'éventuels écarts constatés entre le profil thermique réel et le profil thermique théorique, et par conséquent de localiser en abscisse les corrections de puissance à effectuer pour faire converger le profil thermique réel vers le profil thermique théorique.

Troisièmement, grâce à la correspondance entre les zones **20A, 20B,...,20I** de mesure du (ou des) pyromètre(s) et les sous-matrices **12A, 12B,...,12I** délivrant le rayonnement infrarouge assurant la chauffe de celles-ci, il est possible d'abord de localiser verticalement (c'est-à-dire suivant l'axe des ordonnées) d'éventuels écarts constatés entre le profil thermique réel et le profil thermique théorique, et par conséquent de localiser en ordonnée les corrections de puissance à effectuer pour faire converger le profil thermique réel vers le profil thermique théorique.

Quatrièmement, en utilisant :
- un pyromètre **18** rapide, susceptible d'effectuer des mesures individuelles sur chaque préforme **2** (ou sur une sélection de préformes **2**) à une fréquence suffisante (la fréquence de **30** Hz étant largement suffisante pour une cadence de production de 50 000 préformes par heure),
- une connexion suffisamment rapide du pyromètre **18** à l'unité **15** de contrôle (par exemple via une liaison de type Gigabit Ethernet),
- et un processeur rapide pour les calculs, équipant l'unité **15** de contrôle,
il est possible d'effectuer l'ensemble des opérations (mesure, comparaison, modulation de la puissance rayonnée) en temps réel.

## Revendications

1. Procédé de chauffe d'une ébauche **(2)** en matière plastique pour la fabrication d'un corps creux par formage à partir de l'ébauche **(2),** qui comprend :
- une étape d'introduction de l'ébauche **(2)** dans une unité **(1)** de chauffe comprenant des sources **(11)** de rayonnement électromagnétique monochromatique ou pseudo-monochromatique émettant dans l'infrarouge ;
- une étape de chauffe au cours de laquelle l'ébauche **(2)** est exposée au rayonnement des sources **(11),** réglées à une puissance d'émission prédéterminée ;
ce procédé étant **caractérisé en ce qu'**il comprend en outre :
- une opération de mesure de la température de paroi de l'ébauche **(2),** conduite pendant l'exposition de l'ébauche **(2)** au rayonnement des sources **(11),**
- une opération de modulation de la puissance d'émission en fonction de la température mesurée.

2. Procédé selon la revendication 1, **caractérisé en ce que** la mesure de température est effectuée pour une pluralité de zones superposées sur la paroi de l'ébauche **(2).**

3. Procédé selon les revendications 1 et 2, **caractérisé en ce que** la modulation de la puissance d'émission est effectuée séparément pour chaque zone.

4. Procédé selon la revendication 3, **caractérisé en ce que** la température mesurée pour chaque zone est comparée à une température théorique prédéterminée, et **en ce que** :
- tant que la température mesurée est décrétée égale à la température théorique, la puissance d'émission pour la zone est maintenue,
- dès que la température mesurée est décrétée supérieure à la température théorique, la puissance d'émission pour la zone est diminuée,
- dès que la température mesurée est décrétée inférieure à la température théorique, la puissance d'émission pour la zone est augmentée.

5. Unité **(1)** de chauffe d'ébauches **(2)** en matière plastique pour la fabrication de corps creux par formage à partir des ébauches **(2),** qui comprend un four **(7)** muni d'une paroi **(8)** rayonnante tapissée de sources **(11)** de rayonnement électromagnétique monochromatique ou pseudo-monochromatique émettant dans l'infrarouge à une puissance d'émission prédéterminée, et délimitant une enceinte **(10)** où sont destinées à défiler les ébauches **(2)** en regard de la paroi **(8)** rayonnante, cette unité **(1)** de chauffe étant **caractérisée en ce qu'**elle comprend en outre :
- au moins un dispositif **(18)** de mesure de la température des ébauches **(2),** pointant vers l'enceinte **(10),**
- un dispositif **(16)** de commande de la puissance d'émission des sources **(11)** apte à moduler la puissance d'émission, la puissance d'émission étant modulée en fonction de la température mesurée.

6. Unité **(1)** de chauffe selon la revendication 5, **caractérisée en ce que** le dispositif de mesure comprend au moins un capteur thermique ayant une sensibilité optique incluse dans une gamme prédéterminée de longueur d'ondes ne contenant pas la longueur d'onde ou les longueurs d'onde des sources.

7. Unité **(1)** de chauffe selon la revendication 5 ou 6, **caractérisée en ce que** le dispositif **(18)** de mesure est agencé pour effectuer une mesures de température sur une pluralité de zones superposées sur une même ébauche **(2).**

8. Unité **(1)** de chauffe selon la revendication 7, **caractérisée en ce que** le dispositif **(18)** de mesure comprend plusieurs capteurs thermiques superposés, pointant chacun vers une zone respective.

9. Unité **(1)** de chauffe selon l'une des revendications 5 à 8, **caractérisée en ce qu'**elle comprend :
- une unité **(15)** de contrôle reliée au dispositif **(18)** de mesure et au dispositif **(16)** de commande, cette unité **(15)** de contrôle étant programmée pour comparer un profil thermique réel mesuré sur une ébauche **(2)** avec un profil thermique théorique prédéterminé, et pour commander une modulation de la puissance d'émission de sources **(11)** en fonction de cette comparaison.

10. Unité **(1)** de chauffe selon l'une quelconque des revendications de 5 à 9, **caractérisée en ce que** l'unité **(15)** de contrôle est programmée :
- pour effectuer une comparaison de la température de chaque zone avec une température théorique, et
- pour commander une modulation de la puissance d'émission pour chaque zone séparément.

11. Unité **(1)** de chauffe selon la revendication 10, **caractérisée en ce que** la paroi rayonnante **(8)** est agencée en une matrice de sources **(11)** de rayonnement infrarouge, et **en ce que** cette matrice est subdivisée en une pluralité de sous-matrices situées chacune à la même ordonnée qu'une zone de mesure, et **en ce que** l'unité **(15)** de contrôle est programmée pour commander une modulation de la puissance émise individuellement par chaque sous-matrice.

12. Unité **(1)** de chauffe selon l'une des revendications 5 à 11, **caractérisée en ce que** le four **(7)** comprend une paroi **(9)** opposée à la paroi **(8)** rayonnante, et **en ce que** le dispositif **(18)** de mesure est au moins partiellement logé dans cette paroi **(9)** opposée.

## Patentansprüche

1. Verfahren zum Erwärmen eines Rohlings (2) aus Kunststoff für die Fertigung eines Hohlkörpers mittels Formen anhand des Rohlings (2), umfassend:
- einen Schritt des Einführens des Rohlings (2) in eine Einheit (1) zum Erwärmen, die Quellen (11) monochromatischer oder pseudo-monochromatischer elektromagnetischer Strahlung, die im Infrarotbereich aussenden, umfasst;
- einen Schritt des Erwärmens, bei dem der Rohling (2) der Strahlung der Quellen (11) ausgesetzt wird, die auf eine vorgegebene Aussendungsleistung eingestellt sind;
wobei dieses Verfahren **dadurch gekennzeichnet ist, dass** es ferner umfasst:
- einen Vorgang des Messens der Temperatur der Wand des Rohlings (2), der durchgeführt wird, während der Rohling (2) der Strahlung der Quellen (11) ausgesetzt ist,
- einen Vorgang des Modulierens der Aussendungsleistung je nach der gemessenen Temperatur.

2. Verfahren nach Anspruch 1, **dadurch gekennzeichnet, dass** die Temperaturmessung für mehrere Bereiche durchgeführt wird, die auf der Wand des Rohlings (2) übereinanderliegen.

3. Verfahren nach Anspruch 1 und 2, **dadurch gekennzeichnet, dass** das Modulieren der Aussendungsleistung für jeden Bereich separat durchgeführt wird.

4. Verfahren nach Anspruch 3, **dadurch gekennzeichnet, dass** die für jeden Bereich gemessene Temperatur mit einer vorgegebenen theoretischen Temperatur verglichen wird, und dadurch, dass:
- solange die gemessene Temperatur als gleich der theoretischen Temperatur erklärt wird, die Aussendungsleistung für den Bereich beibehalten wird,
- sobald die gemessene Temperatur als höher als die theoretische Temperatur erklärt wird, die Aussendungsleistung für den Bereich verringert wird,
- sobald die gemessene Temperatur als niedriger als die theoretische Temperatur erklärt wird, die Aussendungsleistung für den Bereich erhöht wird.

5. Einheit (1) zum Erwärmen von Rohlingen (2) aus Kunststoff für die Fertigung von Hohlkörpern mittels Formen anhand der Rohlinge (2), die einen Ofen (7) umfasst, der mit einer strahlenden Wand (8) versehen ist, die mit Quellen (11) monochromatischer oder pseudo-monochromatischer elektromagnetischer Strahlung bedeckt ist, die im Infrarotbereich mit einer vorgegebenen Aussendungsleistung aussenden und einen Raum (10) begrenzen, wo die Rohlinge (2) gegenüber der strahlenden Wand (8) vorbeilaufen sollen, wobei diese Einheit (1) zum Erwärmen **dadurch gekennzeichnet ist, dass** sie ferner umfasst:
- mindestens eine Vorrichtung (18) zum Messen der Temperatur der Rohlinge (2), die auf den Raum (10) gerichtet ist,
- eine Vorrichtung (16) zum Regeln der Aussendungsleistung der Quellen (11), die in der Lage ist, die Aussendungsleistung zu modulieren, wobei die Aussendungsleistung je nach der gemessenen Temperatur moduliert wird.

6. Einheit (1) zum Erwärmen nach Anspruch 5, **dadurch gekennzeichnet, dass** die Vorrichtung zum Messen mindestens einen thermischen Sensor umfasst, der eine optische Empfindlichkeit aufweist, die in einem vorgegebenen Wellenlängenbereich liegt, der die Wellenlänge(n) der Quellen nicht enthält.

7. Einheit (1) zum Erwärmen nach Anspruch 5 oder 6, **dadurch gekennzeichnet, dass** die Vorrichtung (18) zum Messen angeordnet ist, eine Temperaturmessung an mehreren Bereichen durchzuführen, die auf einem selben Rohling (2) übereinanderliegen.

8. Einheit (1) zum Erwärmen nach Anspruch 7, **dadurch gekennzeichnet, dass** die Vorrichtung (18) zum Messen mehrere thermische übereinanderliegende Sensoren umfasst, die jeweils auf einen jeweiligen Bereich gerichtet sind.

9. Einheit (1) zum Erwärmen nach einem der Ansprüche 5 bis 8, **dadurch gekennzeichnet, dass** sie umfasst:
- eine Einheit (15) zum Steuern, die mit der Vorrichtung (18) zum Messen und der Vorrichtung (16) zum Regeln verbunden ist, wobei diese Einheit (15) zum Steuern programmiert ist, ein thermisches Ist-Profil, das an einem Rohling (2) gemessen wurde, mit einem vorgegebenen thermischen SollProfil zu vergleichen, und eine Modulation der Aussendungsleistung der Quellen (11) in Abhängigkeit von diesem Vergleich zu steuern.

10. Einheit (1) zum Erwärmen nach einem der Ansprüche 5 bis 9, **dadurch gekennzeichnet, dass** die Einheit (15) zum Steuern programmiert ist:
- um einen Vergleich der Temperatur jedes Bereichs mit einer Solltemperatur durchzuführen, und
- um eine Modulation der Aussendungsleistung für jeden Bereich separat zu steuern.

11. Einheit (1) zum Erwärmen nach Anspruch 10, **dadurch gekennzeichnet, dass** die strahlende Wand (8) in einer Matrix von Infrarotstrahlungsquellen (11) angeordnet ist, und dadurch, dass diese Matrix in mehrere Untermatrizen unterteilt ist, die sich jeweils an derselben Ordinate wie ein Messbereich befinden, und dadurch, dass die Einheit (15) zum Steuern programmiert ist, eine Modulation der von jeder Untermatrix einzeln ausgesendeten Leistung zu steuern.

12. Einheit (1) zum Erwärmen nach einem der Ansprüche 5 bis 11, **dadurch gekennzeichnet, dass** der Ofen (7) eine Wand (9) umfasst, die der strahlenden Wand (8) gegenüberliegt, und dadurch, dass die Vorrichtung (18) zum Messen zumindest teilweise in dieser gegenüberliegenden Wand (9) aufgenommen ist.

## Claims

1. Method for heating a plastic blank (2) for the production of a hollow body by forming from the blank (2), which comprises:
- a step of introduction of the blank (2) into a heating unit (1) comprising monochromatic or pseudo-monochromatic electromagnetic radiation sources (11) emitting in the infrared;
- a heating step during which the blank (2) is exposed to the radiation from the sources (11), set to a predetermined emission power;
this method being **characterized in that** it further comprises:
- an operation of measurements of the wall temperature of the blank (2), conducted during the exposure of the blank (2) to the radiation from the sources (11),
- an operation of modulation of the emission power as a function of the measured temperature.

2. Method according to Claim 1, **characterized in that** the temperature measurement is performed for a plurality of superposed areas on the wall of the blank (2).

3. Method according to Claims 1 and 2, **characterized in that** the modulation of the emission power is performed separately for each area.

4. Method according to Claim 3, **characterized in that** the temperature measured for each area is compared to a predetermined theoretical temperature, and **in that**:
- as long as the measured temperature is declared equal to the theoretical temperature, the emission power for the area is maintained,
- as soon as the measured temperature is declared higher than the theoretical temperature, the emission power for the area is reduced,
- as soon as the measured temperature is declared lower than the theoretical temperature, the emission power for the area is increased.

5. Unit (1) for heating plastic blanks (2) for the production of hollow bodies by forming from the blanks (2), which comprises an oven (7) provided with a radiating wall (8) carpeted with monochromatic or pseudo-monochromatic electromagnetic radiation sources (11) emitting in the infrared at a predetermined emission power, and delimiting an enclosure (10) in which the blanks (2) are intended to pass facing the radiating wall (8), this heating unit (1) being **characterized in that** it further comprises:
- at least one device (18) for measuring the temperature of the blanks (2), aiming towards the enclosure (10),
- a device (16) for controlling the emission power of the sources (11) capable of modulating the emission power, the emission power being modulated as a function of the measured temperature.

6. Heating unit (1) according to Claim 5, **characterized in that** the measurement device comprises at least one thermal sensor having an optical sensitivity lying in a predetermined range of wavelengths not containing the wavelength or wavelengths of the sources.

7. Heating unit (1) according to Claim 5 or 6, **characterized in that** the measurement device (18) is arranged to perform a measurement of temperature over a plurality of superposed areas on one and the same blank (2).

8. Heating unit (1) according to Claim 7, **characterized in that** the measurement device (18) comprises several superposed thermal sensors, each aiming towards a respective area.

9. Heating unit (1) according to one of Claims 5 to 8, **characterized in that** it comprises:
- a monitoring unit (15) linked to the measurement device (18) and to the control device (16), this monitoring unit (15) being programmed to compare a real thermal profile measured on a blank (2) with a predetermined theoretical thermal profile, and to command a modulation of the emission power of sources (11) as a function of this comparison.

10. Heating unit (1) according to any one of Claims 5 to 9, **characterized in that** the monitoring unit (15) is programmed:
- to perform a comparison of the temperature of each area with a theoretical temperature, and
- to command a modulation of the emission power for each area separately.

11. Heating unit (1) according to Claim 10, **characterized in that** the radiating wall (8) is organized as a matrix of sources (11) of infrared radiation, and **in that** this matrix is subdivided into a plurality of submatrices each situated at the same ordinate as a measurement area, and **in that** the monitoring unit (15) is programmed to command a modulation of the power emitted individually by each submatrix.

12. Heating unit (1) according to one of Claims 5 to 11, **characterized in that** the oven (7) comprises a wall (9) opposite the radiating wall (8), and **in that** the measurement device (18) is at least partially housed in this opposite wall (9).
